# EUROPÄISCHE PATENTSCHRIFT

(11) **EP 0 528 111 B1**
(45) Veröffentlichungstag und Bekanntmachung des Hinweises auf die Patenterteilung: **14.09.1994**
(21) Anmeldenummer: 92107864.8
(22) Anmeldetag: 11.05.1992
(51) Int. Cl.: F16F 13/00, F16F 15/03

(54) **Regulierbares Gummilager**
Regulating rubber mounting
Support en caoutchouc à régler

(30) Priorität: 20.08.1991 DE 4127502
(43) Veröffentlichungstag der Anmeldung: 24.02.1993
(73) Patentinhaber: Firma Carl Freudenberg, 69469 Weinheim (DE)
(72) Erfinder: Freudenberg, Ulrich, Dr., W-6945 Hirschberg (DE); Freudenberg, Tillman, Dr., W-6940 Weinheim (DE)

(56) Entgegenhaltungen:
- DE-A- 3 419 437
- DE-A- 3 619 685
- DE-A- 3 721 866
- DE-C- 3 918 753
- FR-A- 2 657 666
- US-A- 4 635 910
- US-A- 4 650 170
- US-A- 4 836 515

## Beschreibung

Die Erfindung betrifft ein steuerbares Gummilager mit hydraulischer Dämpfungseinrichtung, bei dem ein flüssigkeitsgefüllter Arbeitsraum vorhanden ist, der zumindest in einem Teilbereich von einer flüssigkeitsundurchlässigen Platte aus magnetisierbarem Werkstoff begrenzt ist, die federnd abgestützt ist und durch eine Magnetspule in Richtung des Arbeitsraums hin- und herbewegbar ist, wobei die Magnetspule auf der von dem Arbeitsraum abgewandten Seite der Platte angeordnet und von der Platte durch einen Luftspalt getrennt ist und wobei die Magnetspule in einer Nut eines Stützkörpers aus Weicheisen aufgenommen ist.

Ein solches Gummilager ist aus der DE-C-3918 753 bekannt. Dabei sind ein Permanentmagnet und eine Magnetspule relativ zueinander unbeweglich ausgebildet und dem Gehäuse des Gummilagers in starrer Weise zugeordnet, wobei der Permanentmagnet und die Magnetspule zusammen einen Hubmagneten bilden. Dieser Hubmagnet ist in einem einstückig ausgebildeten Stützkörper angeordnet.

Bei dem Lager gemäß DE-C-3918 753 war der Stützkörper aus einem Massivteil gefertigt, weil hierfür besonders einfache und kostengünstige Herstellverfahren verwendet werden können. Nachteilig ist dabei, daß sich in dem Massivteil Wirbelströme bilden, die unnötig viel elektrische Leistung verbrauchen und nach höheren Frequenzen hin die Kraftwirkung reduzieren.

Der Erfindung liegt die Aufgabe zugrunde, diese Wirbelströme mit möglichst kostengünstigen Mitteln zu unterdrücken. Dabei sind insbesondere die konstruktiven Verhältnisse in Gummilagern zu berücksichtigen wie z.B. der geringe, möglichst kreisförmige Bauraum.

Diese Aufgabe wird erfindungsgemäß bei einem Gummilager der eingangs genannten Art mit den Merkmalen des Anspruchs 1 gelöst. Auf vorteilhafte Ausgestaltung nehmen die Unteransprüche bezug.

Bei dem erfindungsgemäßen, steuerbaren Gummilager gemäß kennzeichnendem Teil des Anspruchs 1 ist es vorgesehen, daß der Stützkörper zumindest innerhalb der Magnetspule und in deren axialen Erstreckung zumindest zwei einander gegenüberliegende Teilkörper aufweist, die durch eine elektrisch isolierende Schicht voneinander getrennt sind, die sich parallel zu der Bewegungsrichtung der Platte und im wesentlichen senkrecht zu der Nut und damit in Achsrichtung der Magnetspule (9) erstreckt.

Die Trennung des Stützkörpers in zumindest zwei Teilkörper innerhalb der axialen Erstreckung der Magnetspule bewirkt, daß die Bildung von Wirbelströmen verringert wird und so eine Temperaturerhöhung sowohl der flüssigkeitsgefüllten Arbeitskammer, als auch der an diese angrenzende Blähfeder wirkungsvoll verhindert wird. Weitgehend konstante Temperaturen auf niedrigem Niveau verhindern die Entstehung von Dampfblasen und die Veränderung der Federeigenschaften des elastomeren Materials der Blähfeder. Die Gebrauchsdauer des Lagers wird dadurch erhöht bei gleichzeitiger Verbesserung der Gebrauchseigenschaften.

Wenn der Hubmagnet durch einen Permanentmagnet gebildet ist, so können thermisch weniger stabile, jedoch kräftigere Magnetmaterialien verwendet werden. Wird das Lager nach einer anderen Ausgestaltung ohne Permanentmagnet aufgebaut, ergeben sich ebenfalls erhebliche Vorteile, weil das Lager aufgrund der geringen Eigenerwärmung in thermisch ungünstigeren Situationen eingesetzt werden kann und weil es weniger Ansprüche an die elektrische Versorgung stellt.

Zur Funktion des Lagers ist folgendes auszuführen: Die flüssigkeitsundurchlässige Platte, die an einer Feder festgelegt ist, ist dem Stützkörper und der darin angeordneten Magnetspule bis auf einen geringen Abstand angenähert. Die Federsteifigkeit der die Platte aufnehmenden Feder ist dabei größer, als diejenige der Blähfeder, die direkt mit dem Auflager und dem daran festgelegten Befestigungsgewinde verbunden ist. Mit Hilfe der Magnetspule können veränderliche Kräfte erzwungen werden, um die Platte in Schwingungen zu versetzen. Diese Schwingungen werden über das Fluid des Arbeitsraumes auf Tragkörper und Blähfeder übertragen. Dadurch wird erreicht, daß sich das Lager synchron mit den eingeleiteten Schwingungen ausdehnt und kontrakiert. Es entsteht dann der Eindruck einer Feder, die statisch stützen kann, während sie keine dynamische Federrate mehr aufweist. Vorteilhaft darüberhinaus ist, daß der mindestens zweiteilige Stützkörper kostengünstig herstellbar und einfach montierbar ist. Ferner ist die Magnetspule fest gelagert, was eine einfache Stromzufuhr zu der Magnetspule gewährleistet.Die die Platte aufnehmende Feder, die beispielsweise als Blattfeder ausgebildet sein kann, weist bei axialer Belastungsrichtung in Richtung des Stützkörpers eine derartige Federsteifigkeit auf, daß in jedem Betriebszustand ein Abstand zwischen dem die Magnetspule aufnehmenden Stützkörper und der an der Feder festgelegten Platte vorhanden ist. Zur Auslenkung der Platte wird der Magnetspule die hierzu erforderliche Wechselspannung aus einer Versorgungseinheit außerhalb des Lagers zugeführt.

Desweiteren enthält das Lager eine an sich bekannte Dämpfungsöffnung, die den Arbeitsraum mit dem Ausgleichsraum verbindet und dadurch die Relativbewegungen zwischen dem Traglager und dem Stützkörper wirkungsvoll dämpft.

Die elektrisch isolierende Schicht zwischen den beiden Teilkörpern, die den Stützkörper bilden, kann aus einem festen Werkstoff bestehen. Beispielsweise kann ein Lack, eine Oxyd- oder Phosphatschicht vorgesehen sein, um die beiden Teilkörper voneinander zu trennen. Diese Anordnung erfordert einen vergleichsweise wenig Herstellungsaufwand, ermöglicht eine einfache Montage und ein derart gestaltetes Lager kann in großen Stückzahlen wirtschaftlich hergestellt werden. In Abhängigkeit von dem jeweiligen Anwendungsfall ist es möglich, die Temperatur des steuerbaren Gummilagers weiter zu reduzieren, in dem mehrere Teilkörper durch elektrisch isolierende Schichten getrennt sind. Je größer die Anzahl der voneinander isolierten Teilkörper, die den Stützkörper bilden, desto weniger können sich Wirbelströme ausbilden, die die Temperatur des Lagers erhöhen.

Die elektrisch isolierende Schicht kann beispielsweise aus einem luftgefüllten Zwischenraum bestehen, der die Teilkörper voneinander trennt. Vorteilhaft an diesem Verfahren ist, daß die Teilkörper nicht durch eine nichtleitende Schicht getrennt werden müssen, wodurch sich im Gegensatz zu einer isolierenden Beschichtung der Teilkörper ein oftmals geringerer Herstellungsaufwand ergibt.

Die Teilkörper können aus aufeinander folgenden Abschnitten eines kontinuierlich durchgehenden Blechstreifens bestehen, die einander spiralförmig umschlingen. Diese Ausbildungsform des Stützkörpers verhindert bei entsprechend geringen Wandstärken und großer Anzahl von Spiralwindungen die Ausbildung von Wirbelströmen besonders wirkungsvoll. Die isolierende Schicht zwischen den beiden sich umschlingenden Teilkörpern ist sehr dünnwandig ausgeführt.

Im Rahmen der vorliegenden Erfindung ist es vorgesehen, ein einseitig beschichtetes Band zu verwenden, was in Hinblick auf ein wirtschaftliches Herstellungsverfahren besonders vorteilhaft ist. Nach weiteren Ausgestaltungen können beispielsweise auch zweiseitig beschichtete Bänder vorgesehen sein oder Bänder aus unterschiedlichem Material.

Gemäß einer anderen Ausgestaltung ist es vorgesehen, daß die Teilkörper aus einander konzentrisch umschließenden Blechstreifen bestehen, die in radialer Richtung zumindest eine Durchtrennung aufweisen. In Abhängigkeit von der maximal zulässigen Wärmeentwicklung im Lager, die sowohl für die Flüssigkeit im Arbeitsraum, als auch für die Blähfeder, die den Arbeitsraum begrenzt, unbedenklich ist, ist die Anzahl der Blechstreifen zu wählen, die einander konzentrisch umschließen. Auch die kreisförmigen Blechstreifen können beispielsweise in einem Tauchverfahren beschichtet werden. Bei entsprechender Anzahl sich umschließender Blechstreifen werden die Gebrauchseigenschaften und die Gebrauchsdauer des Lagers aufgrund geringer Temperaturen positiv beeinflußt.

Gemäß einer weiteren, vorteilhaften Ausgestaltung ist vorgesehen, daß die Teilkörper aus zu einem Paket vereinten Blechplatten konstanter Dicken bestehen. Die Blechplatten können dabei das Zentrum der Magnetspule evolventenförmig umschließen. Durch die außerordentlich hohe Anzahl von Teilkörpern, die voneinander elektrisch isoliert sind, wird die Bildung von Wirbelströmen besonders stark verringert. Eine Temperaturerhöhung im inneren des Lagers ist kaum feststellbar.

Nach einer weiteren Ausgestaltung ist es vorgesehen, daß die Teilkörper durch sich parallel zueinander erstreckende Säulen gebildet sind, die außerhalb der axialen Erstreckung der Magnetspule an den von der Platte abgewandten Enden miteinander verbunden sind. Zur bestimmungsgemäßen Funktion ist es wesentlich, daß die sich parallel zueinander erstreckenden Säulen im Bereich der axialen Erstreckung der Magnetspule nicht verbunden sind. Zur einfacheren Montage können die Säulen auf der von der Platte abgewandten Seite miteinander verbunden sein. Dabei ist es sowohl denkbar, daß die Säulen vor der Montage des Lagers durch ein separates Verbindungsglied miteinander verbunden werden, als auch daß die Säulen aus Vorsprüngen des Stützkörpers bestehen und auf der von der Platte abgewandten Seite der Magnetspule einstückig ineinander übergehend ausgebildet sind.

Die Teilkörper können beispielsweise auch durch Partikel eines Pulvers gebildet sein, die durch ein Bindemittel aus polymerem Werkstoff elektrisch isolierend verklebt sind. Vorteilhaft darüberhinaus ist, daß die Teilkörper in Gestalt eines den Stützkörper bildenden Formteils verklebt sein können. Durch die einstückige Ausbildung des Formteils wird die Montage erheblich vereinfacht. Die Partikel sind in Größe und Anordnung selbstverständlich so auszulegen, daß die Ausbildung von Wirbelströmen wirkungsvoll unterbunden wird. Die Größe der Partikel bewegt sich im Mikrometerbereich, so daß das Formteil anschließend annähernd eine Dichte aufweist, die der eines Teiles aus Eisen entspricht.

Der Gegenstand der Erfindung wird nachfolgend anhand der beigefügten Zeichnungen, die Ausführungsbeispiele darstellen, weiter verdeutlicht.

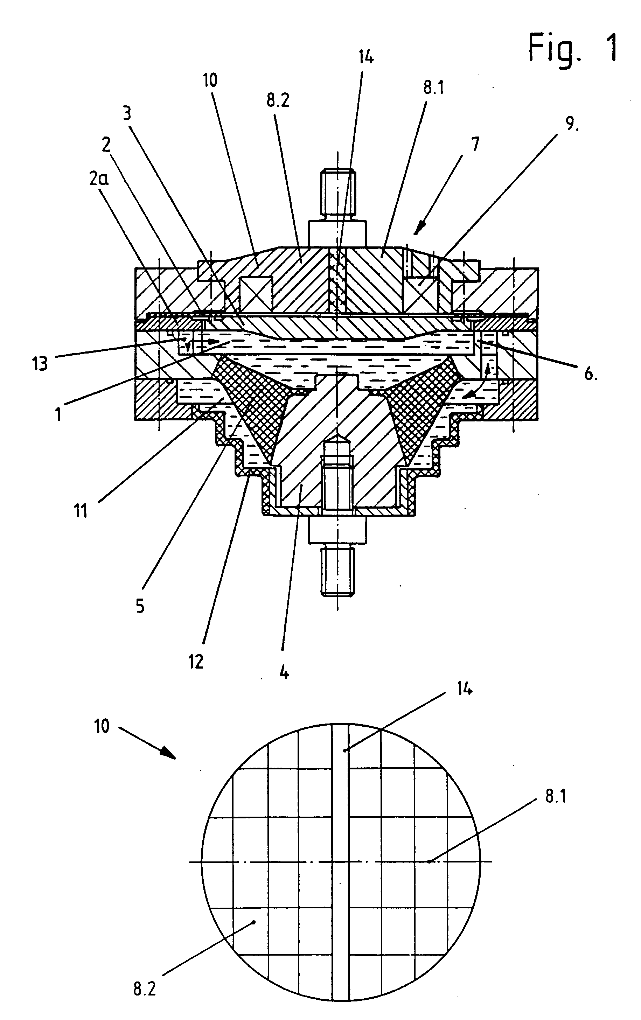

Es zeigen: Fig. 1 ein erfindungsgemäßes steuerbares Gummilager mit zweiteiligem Stützkörper und einer elektrisch isolierenden Schicht aus einem festen Werkstoff.
Fig. 2 ein Lager gemäß Fig. 1, wobei die elektrisch isolierende Schicht durch einen elektrisch isolierenden Luftspalt gebildet ist.
Fig. 3 einen Stützkörper, der durch zwei Teilkörper gebildet ist, wobei die beiden Teilkörper aus aufeinander folgenden Abschnitten eines kontinuierlich durchgehenden Blechstreifens bestehen, die einander spiralförmig umschlingen.
Fig. 4 zeigt Teilkörper, die aus einander konzentrisch umschließenden Blechstreifen bestehen und Fig. 5 Teilkörper, die aus zu einem Paket vereinten Blechplatten konstanter Dicke bestehen.
Fig. 6 zeigt ein Formteil, das als Stützkörper ausgebildet ist und aus polymerem Werkstoff besteht, in dem elektrisch isolierte Partikel eines elektrisch leitenden Pulvers angeordnet sind. Da es sich um eine einstückige Ausführung des Stützkörpers handelt, ist diese Ausgestaltung von der Erfindung nicht erfaßt.
Fig. 7 einen Stützkörper, dessen Teilkörper durch Blechstreifen gebildet sind, die nichtleitend miteinander verbunden sind und an einem Innenring und einem Außenring aus Aluminium festgelegt sind.

Das in Fig. 1 gezeigte Gummilager ist zur Verwendung in einem Kraftfahrzeug bestimmt. Es umfaßt im wesentlichen einen Tragkörper 4, der während der bestimmumgsgemäßen Verwendung mit der Karosserie des Kraftfahrzeuges verschraubt ist und der zugleich der Abstützung der hohlkegelig ausgebildeten, aus gummielastischem Werkstoff bestehenden Blähfeder 5 dient.

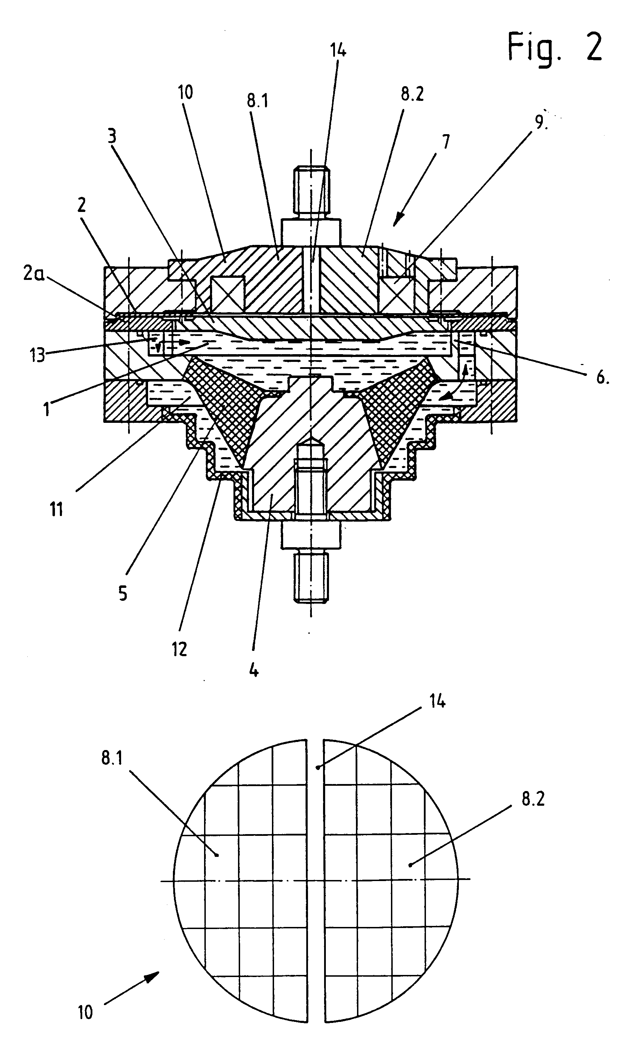

Die Blähfeder 5 und der Tragkörper 4 einerseits, sowie das Gehäuse 6 des Gummilagers andererseits sind unlösbar verbunden, beispielsweise durch unmittelbares anvulkanisieren der Blähfeder 5 an die beiderseits angrenzenden, aus Metall bestehenden Bauteile. Das Gehäuse 6 ist unterseits in sich geschlossen und während der bestimmungsgemäßen Verwendung mit dem abzustützenden Verbrennungsmotor verbunden. Der Stützkörper 10, der aus zumindest zwei einander gegenüberliegenden Teilkörpern 8.1, 8.2 besteht, die durch eine elektrisch isolierende Schicht 14 voneinander getrennt sind, weist eine Nut auf, in der die Magnetspule 9 starr festgelegt ist. Im Sinne einer vorteilhafteren Ausgestaltung können die beiden Teilkörper 8.1, 8.2 weiter unterteilt werden, wobei auch diese zusätzlichen Teilkörper durch elektrisch isolierende Schichten voneinander getrennt sind. Je feiner die Unterteilung in einzelne Teilkörper erfolgt, desto wirkungsvoller können Wirbelströme und damit einhergehende höhere Temperaturen vermieden werden. Die elektrische Leistungsaufnahme des Lagers wird durch eine derartige Ausgestaltung deutlich vermindert. Unterhalb des zweiteiligen Stützkörpers 10 ist im Bereich des Außenumfanges der Teilkörper 8.1 und 8.2 eine kreisförmig gestaltete Blattfeder 2 gelagert, welche im Bereich ihres Innenumfangs die aus Weicheisen bestehende Platte 3 hintergreift und in Richtung der Magnetspule 9 abstützt. Die Blattfeder 2 kann die Platte 3 in Richtung des flüssigkeitsbefüllten Arbeitsraumes 1 vorspannen, wobei ein die Blattfeder 2 klemmendes Teil 2a mit der Platte 3 flüssigkeitsdicht verbunden ist. Der Arbeitsraum 1 ist begrenzt durch die Platte 3 das Gehäuse 6, die Blähfeder 5 und den Tragkörper 4. Der Arbeitsraum 1 ist über eine Dämpfungsöffnung 13 mit dem Ausgleichsraum 11 verbunden, welcher durch einen Faltenbalg 12 begrenzt wird. Der Faltenbalg 12, der eine große Flexibilität und Nachgiebigkeit aufweist, gewährleistet die drucklose Aufnahme zusätzlicher Flüssigkeitsvolumina im Ausgleichsraum 11. Die Dämpfungsöffnung 13 kann beispielsweise wie in der hier gezeigten Ausführung in der Wandung des Gehäuses 6 angeordnet und kanalartig gestaltet sein. Ihr Querschnitt ist zweckmäßigerweise mit der Elastizität der Blähfeder 5 derart abgestimmt, daß sich bei Einleitung von Schwingungen einer zu dämpfenden Frequenz eine Resonanzbewegung des enthaltenen Flüssigkeitsvolumens ergibt und als Folge hiervon eine besonders gute Dämpfungswirkung. Die zumindest zweiteilige Ausführung des Stützkörpers 10 in Teilkörper 8.1, 8.2 bewirkt eine Unterbrechung der Wirbelströme, wodurch ein Temperaturanstieg, der die Gebrauchsdauer verringern würde, zuverlässig verhindert wird. Dabei ist generell anzumerken, daß sich um so weniger Wirbelströme ausbilden, je feiner der Stützkörper 10 in Teilkörper 8.1, 8.2,...,8.n unterteilt ist, die voneinander durch elektrisch isolierende Schichten 14 getrennt sind. Die elektrisch isolierende Schicht 14 kann dabei sowohl aus einem festen Werkstoff bestehen als auch aus einem luftgefüllten Zwischenraum wie beispielsweise in Fig. 2 dargestellt.

Das in Fig. 2 dargestellte Lager entspricht im wesentlichen dem in Fig. 1 dargestellten, jedoch befindet sich zwischen den beiden Teilkörpern 8.1, 8.2 eine elektrisch isolierende Schicht 14 die durch einen luftgefüllten Zwischenraum gebildet ist.

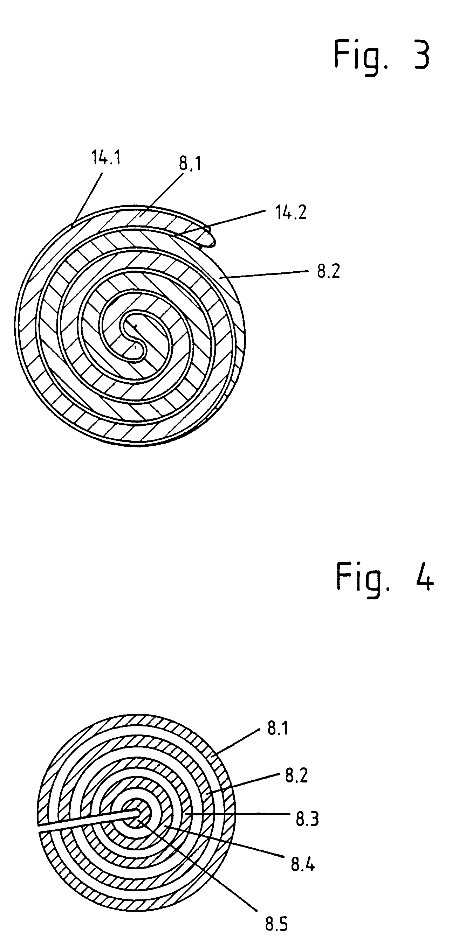

Die Fig. 3, 4, 5, 6, und 7 stellen den mehrteiligen Stützkörper 10 aus den Fig. 1 und 2 verschieden ausgestaltet dar.

Fig. 3 zeigt zwei Teilkörper 8.1, 8.2 die aus aufeinander folgenden Abschnitten eines kontinuierlich durchgehenden Blechstreifens bestehen und einander spiralförmig umschlingen.

Als isolierende Schicht 14 ist in diesem Fall eine dünnwandige Beschichtung 14.1, 14.2 aus einem elektrisch isolierenden Material vorgesehen, das den Teilkörper 8.1 beiderseitig entlang seiner Umfangsflächen umschließt. Diese Beschichtung 14.1, 14.2 läßt sich beispielsweise durch Eintauchen des Teilkörpers 8.1 erzeugen. In den Spiralgängen des ersten Teilkörpers 8.1 ist der zweite Teilkörper 8.2 angeordnet, der in diesem Fall keine elektrisch isolierende Beschichtung aufweist. Neben der hier dargestellten, zweiteiligen Ausführung sind auch mehrteilige Ausführungen denkbar, die jedoch ebenfalls durch eine elektrisch isolierende Schicht voneinander getrennt sein müssen. Die Ausbildung von Wirbelströmen und die damit verbundene Zunahme der Temperatur kann mit steigender Anzahl der Blechstreifen, die sich einander spiralförmig umschlingen, reduziert werden.

In Fig. 4 sind kreisförmige Blechstreifen 8.1 - 8,5 gezeigt, die unterschiedliche Durchmesser aufweisen und einander konzentrisch umschließen. Die Blechstreifen 8.1 bis 8.5 sind in radialer Richtung zumindest ein mal am Umfang geschlitzt. Die elektrisch isolierende Schicht besteht in diesem Fall aus einem Luftspalt, jedoch können die Blechstreifen auch, wie in Fig. 3 gezeigt, beschichtet werden. Mit zunehmender Anzahl der Blechstreifen wird die Gefahr der Wirbelstrombildung verringert.

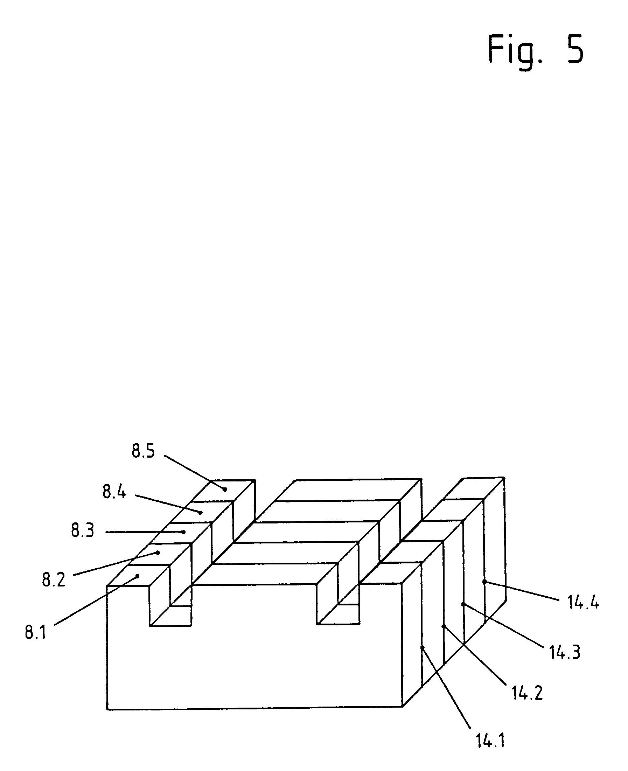

Bei dem in Fig. 5 gezeigt Stützkörper ist von Vorteil, daß die einzelnen Teilkörper 8.1 bis 8.5, in Form von Blechstreifen, besonders einfach herzustellen sind. Dies ist in wirtschaftlicher Hinsicht besonders vorteilhaft. Die einzelnen Blechstreifen sind durch jeweils eine isolierende Beschichtung 14.1 bis 14.4 voneinander getrennt. Die Ausführungsform dieses Stützkörpers stellt lediglich ein Bespiel dar. So besteht auch die Möglichkeit, in einem ähnlich gestalteten Stützkörper zwei parallel zueinander benachbarte Spulen vorzusehen. Diese Ausgestaltung bedingt einen relativ verkleinerten Platzbedarf im Bereich der Umlenkung von einer Nut in die andere. Auch eine Veränderung der Nuten im Bereich ihrer Enden können zu einer Verringerung des benötigten Bauraumes führen, beispielsweise dann, wenn die Enden der Nuten aufeinander zugeführt sind.

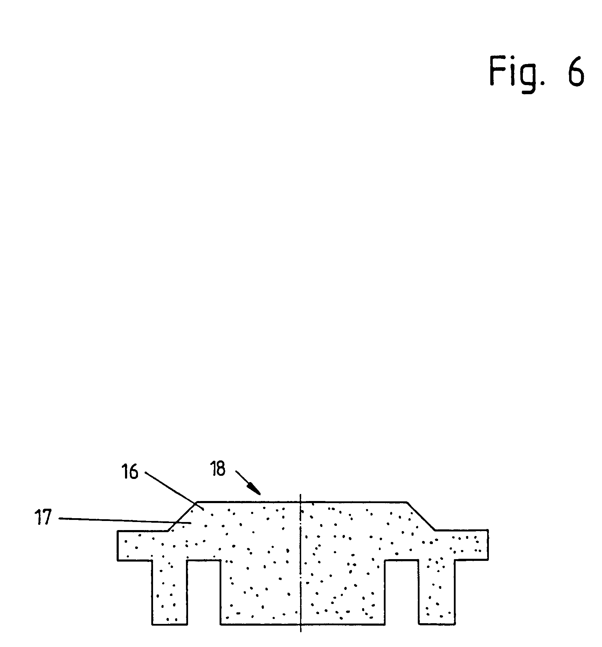

In Fig. 6 ist ein einstückig ausgebildeter Stützkörper gezeigt, der aus einem Formteil 18 besteht. Dieses Formteil 18 ist durch Partikel 16 eines elektrisch und magnetisch leitenden Pulvers gebildet, wobei das Pulver durch ein Bindemittel 17 aus polymerem Werkstoff elektrisch isolierend verklebt ist. Die Größe der Partikel 16 bewegt sich im Bereich weniger Mikrometer. Das Formteil weist eine Dichte auf, die von der eines Formteils aus Eisen, sofern es sich bei diesen Partikeln um Eisenpartikel handelt, nur wenig abweicht. Die Montage solcher Formteile 18 in steuerbare Gummilager ist besonders einfach.

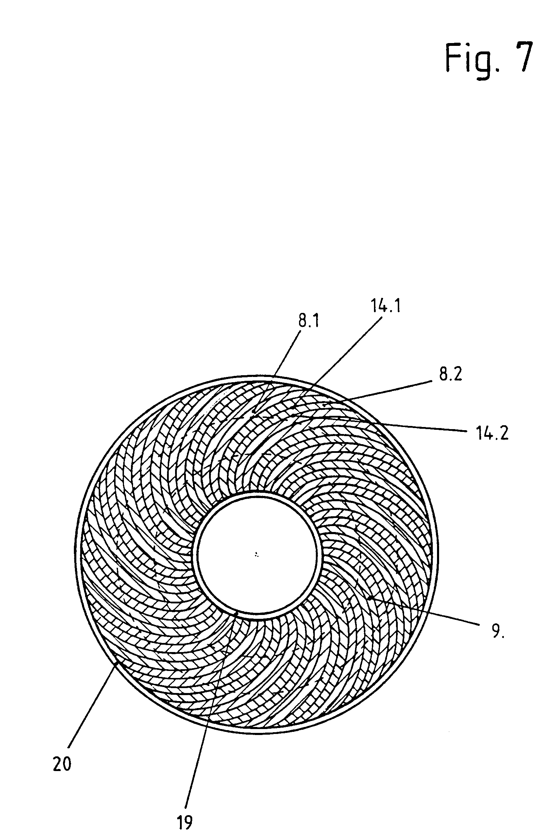

In Fig. 7 ist ein schematisch dargestellter Stützkörper gezeigt, dessen Teilkörper 8.1, 8.2 .... in Form von Blechplatten konstanter Dicke eine evolventenförmige Gestalt aufweisen und zwischen einem inneren 19 und äußeren Stützring 20 festgelegt sind. Der Bereich der Nut, in dem später die Magnetspule 9 angeordnet ist, ist mit unterbrochenen Linien dargestellt. Der innere sowie der äußere Stützring 19, 20 bestehen dabei aus einem nichtmagnetisierbaren Werkstoff. Die isolierenden Schichten 14.1, 14.2, .... sind sehr dünn ausgeführt, so daß diese in dieser Zeichnung nicht darstellbar sind.

## Patentansprüche

1. Steuerbares Gummilager mit hydraulischer Dämpfungseinrichtung, bei dem ein flüssigkeitsgefüllter Arbeitsraum (1) vorhanden ist, der zumindest in einem Teilbereich von einer flüssigkeitsundurchlässigen Platte (3) aus magnetisierbarem Werkstoff begrenzt ist, die federnd abgestützt ist und durch eine Magnetspule (9) in Richtung des Arbeitsraumes (1) hin und her bewegbar, ist, wobei die Magnetspule (9) auf der von dem Arbeitsraum (1) abgewandten Seite der Platte (3) angeordnet und von der Platte (3) durch einen Luftspalt getrennt ist und wobei die Magnetspule in einer Nut eines Stützkörpers aus Weicheisen aufgenommen ist, dadurch gekennzeichnet, daß der Stützkörper (10) zumindest innerhalb der Magnetspule (9) und in deren axialen Erstreckung zumindest zwei einander gegenüberliegende Teilkörper (8.1, 8.2) aufweist, die durch eine elektrisch isolierende Schicht (14) voneinander getrennt sind, die sich parallel zu der Bewegungsrichtung der Platte (3) und im wesentlichen senkrecht zu der Nut und damit in Achsrichtung der Magnetspule (9) erstreckt.

2. Gummilager nach Anspruch 1, dadurch gekennzeichnet, daß die elektrisch isolierende Schicht (14) aus einem festen Werkstoff besteht.

3. Gummilager nach Anspruch 1, dadurch gekennzeichnet, daß die elektrisch isolierende Schicht (14) aus einem luftgefüllten Zwischenraum besteht.

4. Gummilager nach Anspruch 1 bis 3, dadurch gekennzeichnet, daß die Teilkörper (8.1, 8.2) aus aufeinander folgenden Abschnitten eines kontinuierlich durchgehenden Blechstreifens bestehen, die einander spiralförmig umschlingen.

5. Gummilager nach Anspruch 1 bis 3, dadurch gekennzeichnet, daß die Teilkörper (8.1, 8.2) aus einander konzentrisch umschließenden Blechstreifen bestehen, und daß die Blechstreifen in radialer Richtung zumindest eine Durchbrechung aufweisen.

6. Gummilager nach Anspruch 1 bis 3, dadurch gekennzeichnet, daß die Teilkörper (8.1, 8.2) aus zu einem Paket vereinten Blechplatten konstanter Dicke bestehen.

7. Gummilager nach Anspruch 6, dadurch gekennzeichnet, daß die Blechplatten das Zentrum der Magnetspule (9) evolventenförmig umschließen.

8. Gummilager nach Anspruch 1 bis 3, dadurch gekennzeichnet, daß die Teilkörper (8.1, 8.2) durch sich parallel erstreckende Säulen (15) gebildet sind.

9. Gummilager nach Anspruch 8, dadurch gekennzeichnet, daß die Säulen (15) außerhalb der axialen Erstreckung der Magnetspule (9) an den von der Platte (3) angewandten Enden miteinander verbunden sind.

10. Gummilager nach Anspruch 9, dadurch gekennzeichnet, daß die Säulen (15) aus Vorsprüngen des Stützkörpers (10) bestehen und auf der von der Platte (3) abgewandten Seite der Magnetspule (9) einstückig ineinander übergehend ausgebildet sind.

11. Gummilager nach Anspruch 1 und 2, dadurch gekennzeichnet, daß die Teilkörper (8.1., 8.2) durch Partikel (16) eines Pulvers gebildet sind und daß die Partikel (16) durch ein Bindemittel (17) aus polymerem Werkstoff elektrisch isolierend verklebt sind.

12. Gummilager nach Anspruch 11, dadurch gekennzeichnet, daß die Teilkörper (8.1, 8.2) in Gestalt eines den Stützkörper (10) bildenden Formteils (18) verklebt sind.

## Claims

1. A controllable rubber mounting with a hydraulic damping device, in which there is a fluid-filled working space (1) which is bounded at least in a partial area by a fluid-impermeable plate (3) of magnetisable material which is resiliently supported and is movable backwards and forwards in the direction of the working space (1) by a magnet coil (9), the magnet coil (9) being arranged on that side of the plate (3) which faces away from the working space (1) and being separated from the plate (3) by an air gap, and the magnet coil being accommodated in a groove in a supporting body made of soft iron, characterized in that, at least within the magnet coil (9) and within the axial length of the latter, the supporting body (10) has at least two part-bodies (8.1, 8.2) situated opposite one another, which are separated from one another by an electrically insulating layer (14) which extends parallel to the direction of motion of the plate (3) and essentially perpendicular to the groove and hence in the axial direction of the magnet coil (9).

2. A rubber mounting according to claim 1, characterized in that the electrically insulating layer (14) is composed of a solid material.

3. A rubber mounting according to claim 1, characterized in that the electrically insulating layer (14) is composed of an air-filled interspace.

4. A rubber mounting according to any of claims 1 to 3, characterized in that the part-bodies (8.1, 8.2) are composed of successive sections of a continuous sheet-metal strip wrapped around one another in a spiral.

5. A rubber mounting according to any of claims 1 to 3, characterized in that the part-bodies (8.1, 8.2) are composed of concentric sheet-metal strips and in that the sheet-metal strips have at least one opening in the radial direction.

6. A rubber mounting according to any of claims 1 to 3, characterized in that the part-bodies (8.1, 8.2) are composed of sheet-metal plates of constant thickness united to form an assembly.

7. A rubber mounting according to claim 6, characterized in that the sheet-metal plates surround the centre of the magnet coil (9) in the form of involutes.

8. A rubber mounting according to any of claims 1 to 3, characterized in that the part-bodies (8.1, 8.2) are formed by parallel columns (15),

9. A rubber mounting according to claim 8, characterized in that, beyond the axial length of the magnet coil (9), the columns (15) are connected to one another at the ends remote from the plate (3).

10. A rubber mounting according to claim 9, characterized in that the columns (15) are composed of projections of the supporting body (10) and merge integrally into one another on the side of the magnet coil (9) remote from the plate (3).

11. A rubber mounting according to either of claims 1 and 2, characterized in that the part-bodies (8.1, 8.2) are formed by particles (16) of a powder and in that the particles (16) are bonded together in electrically insulating fashion by a binder (17) composed of polymeric material.

12. A rubber mounting according to claim 11, characterized in that the part-bodies (8.1, 8.2) are bonded together in the form of a shaped part (18) which forms the supporting body (10).

## Revendications

1. Support en caoutchouc réglable avec dispositif hydraulique d'amortissement, dans lequel il est prévu une chambre de travail (1) remplie de liquide, qui est délimitée au moins dans une zone partielle par une plaque (3) imperméable au liquide, formée d'un matériau magnétisable et qui est soutenue élastiquement et est déplaçable alternativement par un enroulement d'excitation (9) en direction de la chambre de travail (1), l'enroulement d'excitation (9) étant disposé sur le côté de la plaque (3) qui est opposé à la chambre de travail (1) et étant séparé de la plaque (3) par un intervalle d'air, l'enroulement d'excitation étant disposé dans une rainure d'un corps d'appui en fer doux, caractérisé en ce que le corps d'appui (10) comporte, au moins à l'intérieur de l'enroulement d'excitation (9) et dans son étendue axiale au moins deux corps partiels (8.1, 8.2) situés dans des positions mutuellement opposées et séparés l'un de l'autre par une couche électriquement isolante (14), qui s'étend parallèlement à la direction de mouvement de la plaque (3) et sensiblement perpendiculairement à la rainure et par conséquent dans la direction axiale de l'enroulement d'excitation (9).

2. Support en caoutchouc selon la revendication 1, caractérisé en ce que la couche électriquement isolante (14) se compose d'un matériau solide.

3. Support en caoutchouc selon la revendication 1, caractérisé en ce que la couche électriquement isolante (14) se compose d'un volume intermédiaire rempli d'air.

4. Support en caoutchouc selon une des revendications 1 à 3, caractérisé en ce que les corps partiels (8.1, 8.2) se composent de parties successives d'une bande de tôle continue, qui s'entourent mutuellement en forme de spirale.

5. Support en caoutchouc selon une des revendications 1 à 3, caractérisé en ce que les corps partiels (8.1, 8.2) se composent de bandes de tôle s'entourant mutuellement de façon concentrique et en ce que les bandes de tôle comportent dans une direction radiale au moins une perforation.

6. Support en caoutchouc selon une des revendications 1 à 3, caractérisé en ce que les corps partiels (8.1, 8.2) se composent de plaques de tôle d'épaisseur constante et réunis sous forme d'un paquet.

7. Support en caoutchouc selon la revendication 6, caractérisé en ce que les plaques de tôle entourent en forme de développante le centre de l'enroulement d'excitation (9).

8. Support en caoutchouc selon une des revendications 1 à 3, caractérisé en ce que les corps partiels (8.1, 8.2) sont constitués par des colonnes (15) s'étendant parallèlement entre elles.

9. Support en caoutchouc selon la revendication 8, caractérise en ce que les colonnes (15) sont reliées entre elles, à l'extérieur de l'étendue axiale de l'enroulement d'excitation (9), aux extrémités dirigées vers la plaque (3).

10. Support en caoutchouc selon la revendication 9, caractérisé en ce que les colonnes (15) sont constituées par des saillies du corps d'appui (10) et sont agencées, du côté de l'enroulement d'excitation (9) qui est opposé à la plaque (3), de façon à se rejoindre mutuellement d'une seule pièce.

11. Support en caoutchouc selon une des revendications 1 et 2, caractérisé en ce que les corps partiels (8.1, 8.2) sont constitués par des particules (16) d'une poudre et en ce que les particules (16) sont collées de façon électriquement isolante au moyen d'un liant (17) formé d'un matériau polymère.

12. Support en caoutchouc selon la revendication 11, caractérisé en ce que les corps partiels (8.1, 8.2) sont collés sous forme d'une pièce profilée (18) constituant le corps d'appui (10).
